# EUROPEAN PATENT SPECIFICATION

(11) **EP 0 959 309 B1**
(45) Date of publication and mention of the grant of the patent: **17.11.2004**
(21) Application number: 99201526.3
(22) Date of filing: 17.05.1999
(51) Int. Cl.: F24J 2/42

(54) **Method for starting a system of multiple solar collectors**
Verfahren zum Anfahren eines Systems von verschiedenen Sonnenkollektoren
Méthode pour démarrer un système de multiples capteurs solaires

(30) Priority: 18.05.1998 NL 1009194
(43) Date of publication of application: 24.11.1999
(73) Proprietor: ZONNE-ENERGIE NEDERLAND B.V., 5504 DG Veldhoven (NL)
(72) Inventor: Kratz, Paul, 5629 KH Eindhoven (NL); Van Dam, Johannes, 5512 BE Vessem (NL)
(74) Representative: Bartelds, Erik

(56) References cited:
- AT-B- 375 171
- US-A- 3 799 145
- US-A- 4 027 821
- US-A- 4 122 830
- US-A- 4 319 561
- US-A- 4 326 499

## Description

The invention relates to a method of starting up a system for generating energy from sunlight, which system comprises at least one storage tank and a number of solar collectors all arranged at substantially the same height and in mutually parallel connection, said collectors being connected to said storage tank by feed and discharge pipes to form a closed circuit, wherein the feed pipes are connected to undersides and the discharge pipes are connected to top sides of the collectors, respectively, and a heat transport medium flows through the circuit. Such a method is known, e.g. from US-A-4 122 830.

A problem which occurs in multiple solar collector systems, i.e. systems for generating heat from sunlight wherein use is made of a plurality of solar collectors which are connected in parallel and are connected to a collective storage tank to form a closed circuit, is that it is not found possible in practice to start up all solar collectors simultaneously. During start-up of the system the collectors are filled simultaneously with a heat transport medium, generally water, which is pumped up from the storage tank. This water flows from the underside into the collectors which are usually disposed at an angle to the horizontal. The outlet opening of each collector is herein situated at the top, in theory at precisely the same height as that of the other collectors.

Height differences can however occur in practice, particularly in very large systems with a large number of collectors connected in parallel. This then results in the water in one of the collectors reaching the outlet opening sooner than in the other collectors. A flow is hereby brought about in this collector. The water leaving the solar collector flows downward through the outlet opening in the direction of the storage tank. An underpressure is hereby formed in the relevant collector at the position of the outlet opening, whereby a "siphon effect" is as it were started, and water is drawn upward through the relevant collector. As a result of this suction of the first started collector, the water level in the other collectors will no longer rise, or hardly so, whereby ultimately flow will therefore actually only take place through some of the collectors. This has the drawback that only a part of the capacity of the system is utilized. In addition, there is the danger that the still water in some of the collectors can become overheated by continuous exposure to sunlight and may begin to boil or alternatively, at low temperatures, will freeze in the collectors.

The above-identified prior art document US-A-4 122 830 discloses a system including a plurality of solar energy collectors for heating water, in which the outlet openings of the collectors are connected to a common upwardly inclined discharge pipe running along the top sides of the collectors. The highest point of this discharge pipe is connected to a downwardly extending return pipe. In this way, the siphoning effect described above does not occur at the outlet opening of an individual collector, but rather at the top of the upwardly inclined common discharge pipe. This siphoning effect is in fact used for operating this prior art system with a relatively small pump. The piping of this prior art system is dimensioned such that the velocity of the water circulating in the system is sufficient to entrain any air collecting in the pipes at the high point and carry it toward the storage tank. This storage tank includes a standpipe vent through which air may be removed from the system.

The invention has for its object to provide a method of starting up a system of the above described type, wherein the problem of siphoning at individual collectors does not occur. This is achieved according to the invention in that at least some of the collectors lie lower than the other collectors, and in that at least during start-up a venting connection is realized, interconnecting the storage tank and at least the lowest-lying collectors. With such a venting connection there will no longer be any occurrence of an underpressure and an associated siphon effect but, when the water in each collector reaches the edge of the outlet opening, it will simply flow over. In the absence of the siphon effect the filling of the one collector will no longer have any effect on the other collectors, so that all collectors will be filled successively and the system can thus be started up uniformly.

The effecting of a venting connection between a storage tank and one collector in a system of a plurality of solar collectors is known per se from US-A-4 027 821, but this relates to a system of collectors connected in series, of which only the uppermost is connected to the storage tank, and only then for emptying of the system.

It is further known from US-A-3 799 145 to form a venting connection between each of the collectors and the storage tank during filling of a system consisting of a number of solar collectors connected in parallel. This relates however to collectors which are provided only on the underside with inlet and outlet openings and which cannot therefore be filled at all without venting. The problem of a siphon effect does not of course occur here.

A venting connection is preferably also effected between the storage tank and at least some of the collectors for emptying the system. In this manner the system can be emptied rapidly and simply. This is important inter alia to prevent freezing or, conversely, boiling of the heat transport medium in the collectors in the case the rate of flow of the heat transport medium through the system is low due to low demand and the outside temperatures are very low respectively very high. In this way is ensured that ordinary water can be used as heat transport medium in the system instead of a medium with a depressed freezing point such as glycol. Nor as a result does use have to be made of dual-embodiment pumps since the heat transport medium will anyway simply run back to the storage tank when a pump fails and there is therefore no danger of still medium boiling in the collectors.

Although in principle only the lowest-lying collectors have to be vented for start-up, it is recommended in practice that a venting connection is effected to each collector, because it is often not possible to determine beforehand with any certainty in which collector the liquid flow will begin first.

The invention also relates to a multiple collector system suitable for performing the above described method. Such a system, which will be provided with at least one storage tank and a number of solar collectors arranged at substantially the same height and in mutually parallel connection, said collectors being connected to said storage tank by feed and discharge pipes to form a closed circuit, wherein the feed pipes are connected to undersides and the discharge pipes are connected to top sides of the collectors, respectively, and the system is at least partially filled with a heat transport medium which is circulated therein by means of at least one pump, is characterized according to the invention in that at least some of the collectors lie lower than the other collectors, and in that the system includes means for uniform start-up of the different collectors, said start-up means comprising at least one venting connection interconnecting the storage tank and at least the lowest-lying collectors. The venting connection is preferably formed by embodying a pipe for the heat transport medium in over-dimensioned manner. No separate venting line need then be installed. The over-dimensioned pipe is then preferably the discharge pipe leading from the collector to the storage tank. Use can advantageously be made for the dimensioning of this pipe, assuming the expected flow and the known fall, of calculation methods developed for dimensioning sewage piping.

The invention will now be elucidated on the basis of an embodiment wherein reference is made to the annexed drawing, in which:

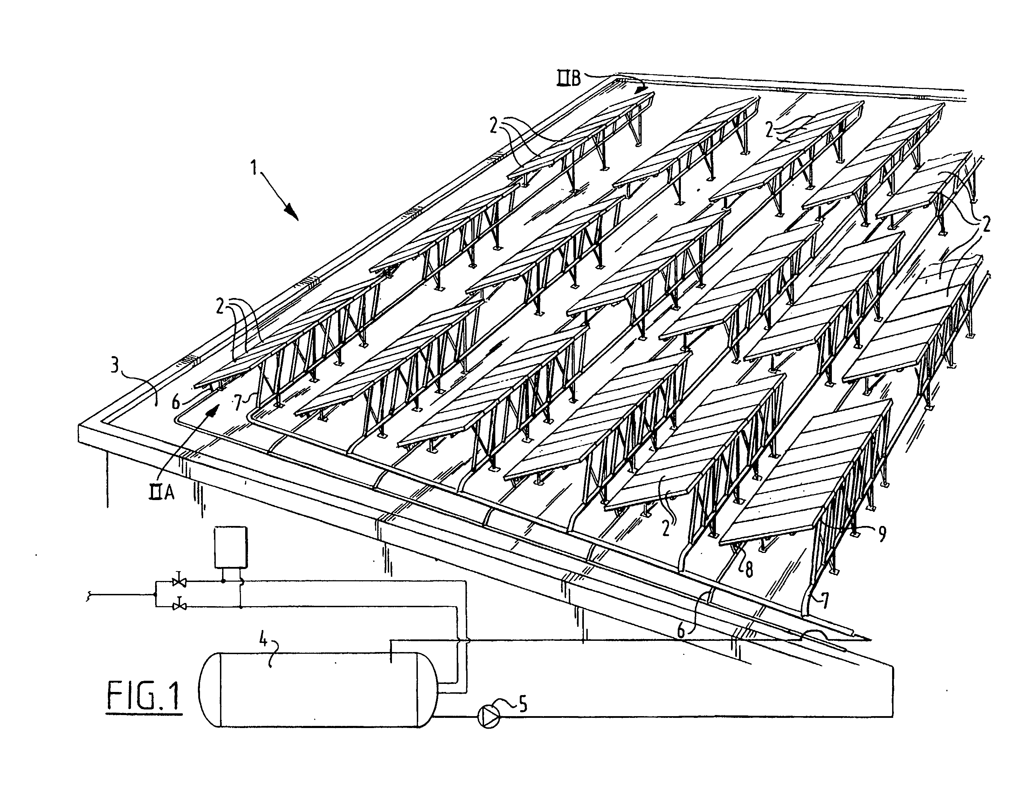

fig. 1 is a perspective top view of a multiple solar collector system according to the invention, wherein a part of the system is shown schematically,

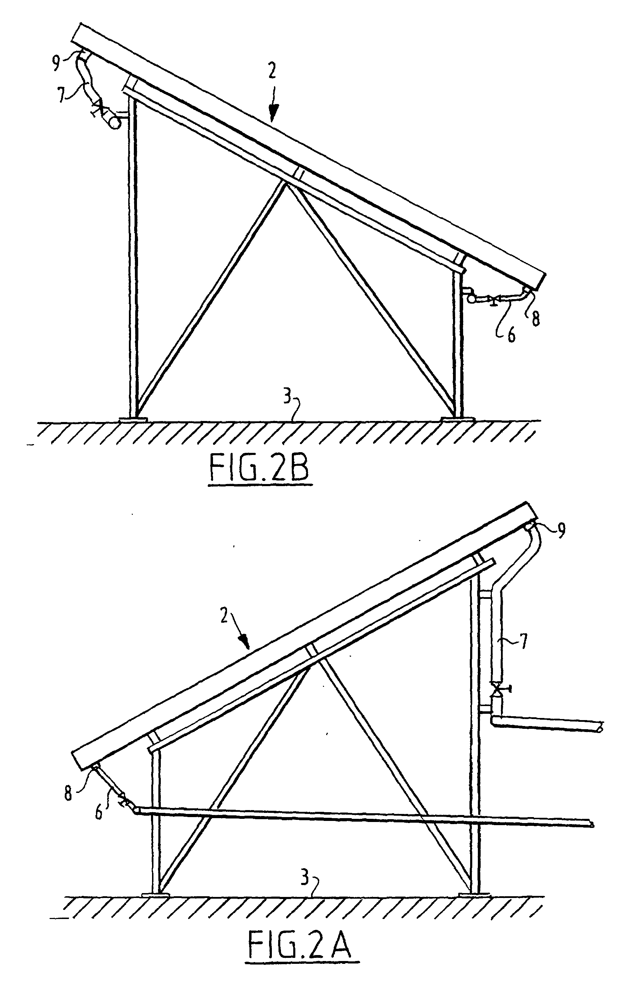

fig. 2A and 2B show side views of respectively the beginning and the end of the collector array of fig. 1, and
fig. 3A and 3B show schematic sections through a number of collectors connected in parallel respectively without and with the start-up means according to the invention, wherein the effect of the venting connection on start-up is shown.

A system 1 for generating heat from solar radiation comprises a large number of separate collectors 2 disposed on a surface 3, for instance a roof of a factory or other building complex. Each collector 2 is placed at a slight inclination in order to form an optimum angle with the incident sunlight. Through the collectors flows a heat transport medium which is circulated to and from collectors 2 from a storage tank 4 by means of a pump 5 via feed and discharge pipes 6, 7 connected to the underside respectively the top side of collectors 2. Situated in conventional manner in the proximity of storage tank 4 are one or more heat exchangers (not shown here) through which flows a second medium, generally tap water or heating water. This water is heated in the heat exchanger(s), wherein heat is extracted from the heat transport medium.

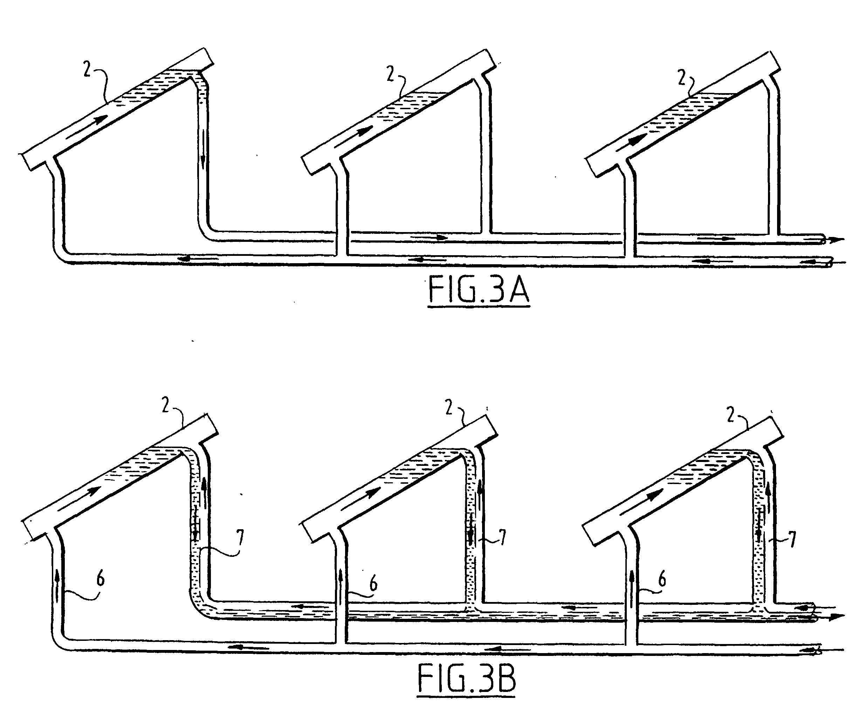

The heat transport medium flows into the collector on the underside through an inlet opening 8 and leaves the collector on the top side via an outlet opening 9. This latter also functions herein as venting aperture in that it is connected to discharge pipe 7 which is over-dimensioned. This entails that the size of discharge pipe 7 is chosen greater than would be necessary on the basis of the anticipated flow, that in any case during start-up of the system, and preferably under all conditions, an uninterrupted venting connection is formed between collector 2 and storage tank 4. In this way the occurrence of an underpressure, and therefore a siphon effect, is avoided during start-up (fig. 3A), while all the collectors can moreover be emptied in rapid and simple manner to prevent the danger of freezing or, conversely, boiling of the heat transport medium.

## Claims

1. Method of starting up a system (1) for generating energy from sunlight, which system (1) comprises at least one storage tank (4) and a number of solar collectors (2) all arranged at substantially the same height and in mutually parallel connection, said collectors (2) being connected to said storage tank (4) by feed and discharge pipes (6, 7) to form a closed circuit, wherein the feed pipes (6) are connected to undersides and the discharge pipes (7) are connected to top sides of the collectors (2), respectively, and a heat transport medium flows through the circuit, **characterized in that** at least some of the collectors (2) lie lower than the other collectors (2), and **in that** at least during start-up a venting connection is realized, interconnecting the storage tank (4) and at least the lowest-lying collectors (2).

2. Method as claimed in claim 1, **characterized in that** a venting connection is also effected between the storage tank (4) and at least some of the collectors (2) for emptying the system (1).

3. Method as claimed in claim 1 or 2, **characterized in that** a venting connection is effected to each collector (2).

4. System (1) for generating energy from sunlight, provided with at least one storage tank (4) and a number of solar collectors (2) arranged at substantially the same height and in mutually parallel connection, said collectors (2) being connected to said storage tank (4) by feed and discharge pipes (6, 7) to form a closed circuit, wherein the feed pipes (6) are connected to undersides and the discharge pipes (7) are connected to top sides of the collectors (2), respectively, and the system (1) is at least partially filled with a heat transport medium which is circulated therein by means of at least one pump (5), **characterized in that** at least some of the collectors (2) lie lower than the other collectors (2), and **in that** the system (1) includes means for uniform start-up of the different collectors (2), said start-up means comprising at least one venting connection interconnecting the storage tank (4) and at least the lowest-lying collectors (2).

5. System (1) as claimed in claim 4, **characterized in that** the start-up means comprise venting connections interconnecting the storage tank (4) and each of the collectors (2).

6. System (1) as claimed in claim 4 or 5, **characterized in that** the venting connection is formed by embodying a pipe (7)for the heat transport medium in over-dimensioned manner.

7. System (1) as claimed in claim 6, **characterized in that** the over-dimensioned pipe is the discharge pipe (7) leading from the collector (2) to the storage tank (4).

## Patentansprüche

1. Verfahren zum Anfahren eines Systems (1) zum Generieren von Energie aus Sonnenlicht, wobei das System (1) wenigstens einen Speichertank (4) aufweist, sowie mehrere Sonnenkollektoren (2), die alle im wesentlichen auf gleicher Höhe und in paralleler Verbindung miteinander angeordnet sind, wobei die Kollektoren (2) mit dem Speichertank (4) über Zuführ- und Abführrohre (6, 7) verbunden sind, um einen geschlossenen Kreis auszubilden, wobei die Zuführrohre (6) mit Unterseiten und die Abführrohre (7) mit Oberseiten der Kollektoren (2) jeweils verbunden sind und ein Wärmeübertragungsmedium durch den Kreis strömt, **dadurch gekennzeichnet, daß** wenigstens einige der Kollektoren (2) tiefer liegen als die anderen Kollektoren (2) und daß wenigstens während des Anfahrens eine Entlüftungsverbindung realisiert ist, welche den Speichertank (4) und wenigstens die zuunterst liegenden Kollektoren (2) verbindet.

2. Verfahren nach Anspruch 1, **dadurch gekennzeichnet, daß** eine Entlüftungsverbindung auch zwischen dem Speichertank (4) und wenigstens einigen der Kollektoren (2) bewirkt wird, um das System (1) zu leeren.

3. Verfahren nach Anspruch 1 oder 2, **dadurch gekennzeichnet, daß** eine Entlüftungsverbindung für jeden Kollektor (2) bewirkt ist.

4. System (1) zum Generieren von Energie aus Sonnenlicht, das mit wenigstens einem Speichertank (4) und mehreren Sonnenkollektoren (2) versehen ist, die auf im wesentlichen gleicher Höhe und parallel zueinander verbunden angeordnet sind, wobei die Kollektoren (2) durch Zuführ- und Abführrohre (6, 7) mit dem Speichertank (4) verbunden sind, um einen geschlossenen Kreis zu bilden, wobei die Zuführrohre (6) mit den Unterseiten und die Abführrohre (7) mit den Oberseiten der Kollektoren (2) jeweils verbunden sind und das System (1) zumindest teilweise mit einem Wärmeübertragungsmedium gefüllt ist, das mit Hilfe wenigstens einer Pumpe (5) darin zirkuliert wird, **dadurch gekennzeichnet, daß** wenigstens einige der Kollektoren (2) tiefer liegen als die anderen Kollektoren (2) und daß das System (1) Mittel aufweist zum gleichförmigen Anfahren der unterschiedlichen Kollektoren (2), wobei die Anfahrmittel wenigstens eine Entlüftungsverbindung aufweisen, welche den Speichertank (4) und zumindest die zuunterst liegenden Kollektoren (2) verbindet.

5. System (1) nach Anspruch 4, **dadurch gekennzeichnet, daß** die Anfahrmittel Entlüftungsverbindungen aufweisen, welche den Speichertank (4) und jeden der Kollektoren (2) verbinden.

6. System (1) nach Anspruch 4 oder 5, **dadurch gekennzeichnet, daß** die Entlüftungsverbindung ausgebildet ist durch Ausgestaltung eines Rohres (7) für das Wärmeübertragungsmedium in überdimensionierter Weise.

7. System (1) nach Anspruch 6, **dadurch gekennzeichnet, daß** das überdimensionierte Rohr das Abführrohr (7) ist, das von dem Kollektor (2) zu dem Speichertank (4) führt.

## Revendications

1. Méthode pour démarrer un système (1) destiné à générer de l'énergie solaire, lequel système (1) comprend au moins une cuve de stockage (4) et un certain nombre de capteurs solaires (2) tous agencés à sensiblement la même hauteur et en liaison mutuellement parallèle, lesdits capteurs (2) étant reliés à ladite cuve de stockage (4) par des conduites d'alimentation et de déchargement (6, 7) pour former un circuit fermé, dans laquelle les conduites d'alimentation (6) sont reliées aux côtés inférieurs et les conduites de déchargement (7) sont reliées aux côtés supérieurs des capteurs (2), respectivement, et un fluide caloporteur circule à travers le circuit, **caractérisée en ce qu'**au moins certains des capteurs (2) se situent plus bas que les autres capteurs (2), et **en ce qu'**au moins pendant le démarrage, une connexion d'évacuation est effectuée, interconnectant la cuve de stockage (4) et au moins les capteurs les plus bas (2).

2. Méthode selon la revendication 1, **caractérisée en ce qu'**une connexion d'évacuation est également effectuée entre la cuve de stockage (4) et au moins certains des capteurs (2) pour vider le système (1).

3. Méthode selon la revendication 1 ou 2, **caractérisée en ce qu'**une connexion d'évacuation est effectuée pour chaque capteur (2).

4. Système (1) destiné à générer de l'énergie solaire, doté d'au moins une cuve de stockage (4) et d'un certain nombre de capteurs solaires (2) agencés à sensiblement la même hauteur et en liaison mutuellement parallèle, lesdits capteurs (2) étant reliés à ladite cuve de stockage (4) par des conduites d'alimentation et de déchargement (6, 7) pour former un circuit fermé, dans lequel les conduites d'alimentation (6) sont reliées aux cotés inférieurs et les conduites de déchargement (7) sont reliées aux côtés supérieurs des capteurs (2), respectivement, et le système (1) est au moins en partie rempli d'un fluide caloporteur qui circule à l'intérieur de celui-ci au moyen d'au moins une pompe (5), **caractérisé en ce qu'**au moins certains de capteurs (2) se situent plus bas que les autres capteurs (2), et **en ce que** le système (1) comprend des moyens pour démarrer uniformément les différents capteurs (2), lesdits moyens de démarrage comprenant au moins une connexion d'évacuation interconnectant la cuve de stockage (4) et au moins les capteurs (2) les plus bas.

5. Système (1) selon la revendication 4, **caractérisé en ce que** les moyens de démarrage comprennent des connexions d'évacuation interconnectant la cuve de stockage (4) et chacun des capteurs (2).

6. Système (1) selon la revendication 4 ou 5, **caractérisé en ce que** la connexion d'évacuation est formée en formant une conduite (7) pour le fluide caloporteur d'une manière surdimensionnée.

7. Système (1) selon la revendication 6, **caractérisé en ce que** la conduite surdimensionnée est la conduite de déchargement (7) menant du capteur (2) à la cuve de stockage (4).
